(19) Europäisches Patentamt European Patent Office Office européen des brevets

(11) **EP 4 510 557 A1**

(12) **EUROPEAN PATENT APPLICATION**

(43) Date of publication:
**19.02.2025 Bulletin 2025/08**

(21) Application number: **24189526.7**

(22) Date of filing: **18.07.2024**

(51) International Patent Classification (IPC):
**H04N 7/18** (2006.01)     **G06V 20/52** (2022.01)

(52) Cooperative Patent Classification (CPC):
**H04N 7/188; G06V 20/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.08.2023 KR 20230101628**

(71) Applicant: **Hanwha Vision Co., Ltd.**
**Seongnam-si, Gyeonggi-do 13488 (KR)**

(72) Inventors:
• **Lim, Jeongeun**
  **13488 Seongnam-si, Gyeonggi-do (KR)**
• **Kim, Hansang**
  **13488 Seongnam-si, Gyeonggi-do (KR)**
• **Kim, Seonghee**
  **13488 Seongnam-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **VIDEO DATA PROCESSING TECHNOLOGY FOR PROTECTING PRIVACY AND REDUCING DATA THROUGHPUT**

(57)     Provided is a method of processing video data, which includes: storing video data captured by a camera; detecting an object of interest from a plurality of video frames of the stored video data; performing masking processing on an object area of interest including the detected object of interest; and encoding the video data which is subjected to the masking processing to generate a video stream, wherein the masking processing is performed by estimating a position of the object of interest in a video frame located between two or more video frames for which a difference vector of the object of interest has been calculated, based on the difference vector of the object of interest detected in the two or more video frames..

## FIG. 3

EP 4 510 557 A1

**Description**

BACKGROUND

**1. Field of the Invention**

The disclosure relates to a video data processing technology for protecting privacy and reducing data throughput.

**2. Discussion of Related Art**

When a video transmitted from a surveillance camera is monitored, privacy infringement issues occur due to the exposure of privacy-related information, such as a person's face. One implementation for resolving these issues uses a method in which, before a video from a surveillance camera is transmitted, mosaic processing, blurring processing, or blocking processing is performed on a preset specific area in the video or a specific area identified through image recognition in the video, and then the processed video is transmitted.

Such a method is referred to as privacy masking, by which privacy-sensitive information is able to be obscured during reproduction of the transmitted video at a security control center and the like, thereby resolving the infringement issues.

However, in order to mask a specific area, such as a human face and the like, for privacy protection, there is a need to detect and track a specific object, such as a human face and the like, for each of a plurality of video frames (picture frames) constituting a video stream. When an apparatus for processing video data detects an object for each video frame and masks the object, a large amount of hardware resources are consumed and a significant amount of data throughput is required. Additionally, once the masked video data is transmitted to a monitoring server, it is difficult to identify the masked object on the monitoring server.

SUMMARY OF THE INVENTION

The present invention is directed to providing a technology of protecting privacy and reducing data throughput when transmitting video data captured by a surveillance camera, such as a closed-circuit television (CCTV).

The present invention is also directed to providing a data transmission technology capable of easily identifying an object of interest from masked video data.

According to an aspect of the present invention, there is provided a method of processing video data, which includes: storing video data captured by a camera; detecting an object of interest from a plurality of video frames of the stored video data; performing masking processing on an object area of interest including the detected object of interest; and encoding the video data which is subjected to the masking processing to generate a video stream, wherein the masking processing is performed by estimating a position of the object of interest in a video frame located between two or more video frames for which a difference vector of the object of interest has been calculated, based on the difference vector of the object of interest detected in the two or more video frames.

The method may further include transmitting transmission data including the video stream.

In the performing of the masking processing on the object area of interest including the detected object of interest may include calculating a difference vector representing a difference between a position of a first object of interest detected within a first video frame and a position of the first object of interest detected within a second video frame, wherein the second video frame is an $(N+1)^{th}$ frame from the first video frame; predicting a position of the first object of interest in a video frame between the first video frame and the second video frame using the difference vector; and performing masking processing on the first object of interest in a plurality of video frames from the first video frame to the second video frame.

When an absolute value of the difference vector is greater than or equal to a predetermined first threshold, the number of video frames in which the position of the first object of interest is predicted may be set to M, which may be a value smaller than N.

The method may further include: extracting feature information from the plurality of video frames of the stored video data, and encoding the extracted feature information to generate a feature stream; and transmitting transmission data including the video stream and the feature stream.

The method may further include: selecting one or more video frames from among the plurality of video frames constituting at least a portion of the video data; and extracting feature information from a selected area of at least a portion of the selected video frame, encoding the extracted feature information to generate selected area feature information, and adding the selected area feature information to the feature stream.

The selected video frame may include a best shot of the object of interest, and the best shot may include an object image with a highest object identification score calculated based on a size of an area occupied by the object, an orientation of the object, and a sharpness of the object.

The method may further include: generating object metadata including characteristic information of the object of interest included in the best shot; and adding the generated object metadata to the transmission data.

The selected video frame may include an event detection shot, and the event detection shot may include a video frame captured during detection of a preset event.

The method may further include: generating event metadata including characteristic information of the event and the object of interest included in the event detection shot; and adding the generated event metadata to the transmission data.

When a preset situation is detected, the masking processing may not be performed on an object area of interest related to the preset situation.

According to another aspect of the present invention, there is provided a program stored in a recording medium to cause a computer to execute the method of processing video data.

According to another aspect of the present invention, there is provided an apparatus for processing video data, which includes: a memory in which input data is stored; and a processor coupled to the memory, wherein the processor is configured to: store video data captured by a camera; detect an object of interest from a plurality of video frames of the stored video data; perform masking processing on an object area of interest including the detected object of interest; and encode the video data which is subjected to the masking processing to generate a video stream, wherein the masking processing is performed by estimating a position of the object of interest in a video frame located between two or more video frames for which a difference vector of the object of interest has been calculated, based on the difference vector of the object of interest detected in the two or more video frames.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 is a diagram illustrating connection relationships between an apparatus for processing video data and other components according to an embodiment of the present disclosure;
FIG. 2 is a block diagram illustrating a configuration of an apparatus for processing video data according to the present disclosure;
FIG. 3 is a flowchart showing a method of processing video data that is performed by an apparatus for processing video data according to the present disclosure;
FIG. 4 is a flowchart showing a method of processing video data performed by a monitoring server according to the present disclosure;
FIG. 5 is a diagram illustrating an example of masking processing for an object of interest according to the present disclosure;
FIG. 6 is a diagram illustrating masking processing by object motion estimation according to the present disclosure;
FIG. 7 is a diagram illustrating an example in which a difference vector calculation interval is adjusted when the amount of motion of an object is greater than or equal to a predetermined threshold according to the present disclosure;
FIG. 8 is a diagram illustrating video encoding and feature encoding of video data according to the present disclosure;
FIG. 9 is a diagram illustrating feature encoding for a partial area of a selected video frame according to the present disclosure;
FIG. 10 is a diagram illustrating transmission of metadata for a partial area of a selected video frame according to the present disclosure;
FIG. 11 is a diagram illustrating a configuration of a camera according to the present disclosure; and
FIG. 12 is a diagram illustrating an example when masking processing is not performed according to the present disclosure.

DETAILED DESCRIPTION OF EXEMPLARY EMBODIMENTS

Specific structural and procedural details disclosed herein are merely representative for purposes of describing embodiments according to the concept of the present disclosure. Accordingly, the embodiments according to the concept of the present disclosure may be embodied in many alternate forms. The present disclosure should not be construed as limited to the embodiments of the present disclosure set forth herein.

While the embodiments according to the concept of the present disclosure are susceptible to various modifications and alternative forms, specific embodiments thereof are shown by way of embodiment in the drawings and will herein be described in detail. It should be understood, however, that there is no intent to limit the embodiments according to the concept of the present disclosure to the particular forms disclosed, but on the contrary, the embodiments according to the concept of the present disclosure are to cover all modifications, equivalents, and alternatives falling within the spirit and scope of the invention.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present invention.

It will be understood that when a first element is referred to as being "connected" or "coupled" to a second element, the first element can be directly connected or coupled to the second element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the invention. As used herein, the singular forms "a" and "an" are intended to include the plural forms as well, unless the context clearly indicates otherwise. It will be further understood that the terms "comprise," "comprising," "include" and/or "including" used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by those of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the description of the embodiments, the detailed description of related known functions or configurations will be omitted herein to avoid making the subject matter of the present invention unclear.

Hereinafter, the present invention will be described in detail by describing exemplary embodiments of the present invention with reference to the accompanying drawings.

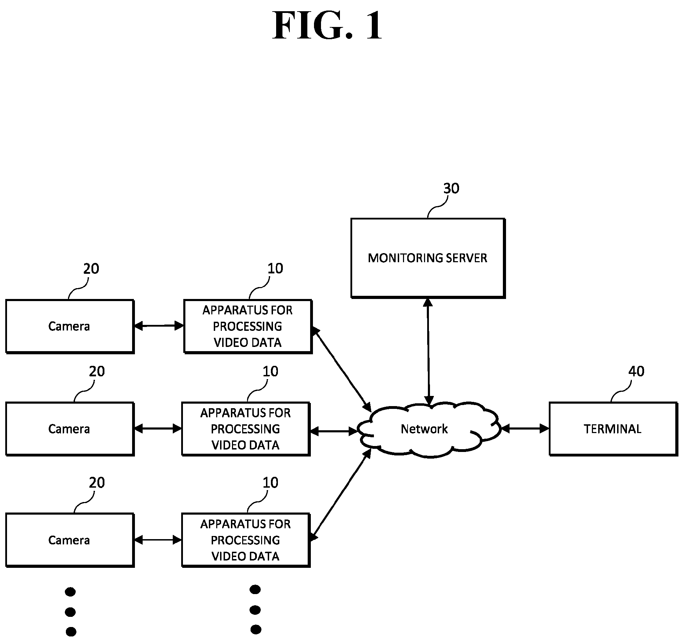

FIG. 1 is a diagram illustrating connection relationships between an apparatus for processing video data and other components according to an embodiment of the present disclosure.

Referring to FIG. 1, an apparatus 10 for processing video data may be connected to a camera 20 and receive, store, and process video data captured by the camera 20. The apparatus 10 for processing video data may be connected to a single camera 20 or to a plurality of cameras 20.

The apparatus 10 for processing video data may be connected to a monitoring server 30 through a network. The apparatus 10 for processing video data may process video data captured by the camera 20 to generate transmission data and transmit the generated transmission data to the monitoring server 30.

The monitoring server 30 may restore masked video data from the transmission data. The monitoring server 30 may restore feature information (a feature map) from the transmission data and use the restored feature information for processing of machine vision. The monitoring server 30 may restore feature information (a feature map) of a best shot or an event detection shot from the transmission data and use the restored feature information for processing of machine vision. Additionally, the monitoring server 30 may restore metadata of the best shot or the event detection shot from the transmission data and use the restored metadata for processing by human vision in the processing for machine vision.

A terminal 40 used by a user or an administrator may be connected to the monitoring server 30 through a network. The terminal 40 may receive video data captured by the camera 20 or information related to the video from the monitoring server 30, or may receive processing results by machine vision.

The camera 20 may capture a monitoring target area to acquire video data for the monitoring target area. The camera 20 may capture the monitoring target area in real time for surveillance or security purposes. The camera 20 may be a pan-tilt-zoom (PTZ) camera capable of panning and tilting with an adjustable zoom magnification of a lens. The camera 20 may be provided as a plurality of cameras 20.

The camera 20 may be a low-power camera powered by a battery. The low-power camera normally remains in a sleep mode and periodically wakes up to check whether an event has occurred. The low-power camera switches to an active mode when an event occurs, and returns to a sleep mode when no event occurs. As described above, a low-power camera may remain in the active mode only when an event occurs, thereby reducing power consumption.

The camera 20 may communicate with network apparatuses using various communication methods, such as wired and wireless local area networks (LANs), wireless fidelity (Wi-Fi), ZigBee, Bluetooth, and near field communication. For example, the camera 20 may perform communication according to a low-power wireless communication protocol using radio frequency (RF) in an industrial scientific medical (ISM) band.

The apparatus 10 for processing video data may store video data received from the camera 20 and provide the stored video data or transmission data obtained by processing the video data to the monitoring server 30 through a network. The apparatus 10 for processing video data may include, but is not limited to, a digital video recorder, a network video recorder, and the like.

The network may include a wired network or a wireless network. The wireless network may be a 2G (generation) or 3G cellular communication system, 3rd Generation Partnership Project (3GPP), a 4G communication system, Long-Term Evolution (LTE), World Interoperability for Microwave Access (WiMAX), or the like.

The terminal 40 may include a terminal used by an administrator or a user of the monitoring server 30. The terminal 40 may connect to the monitoring server 30 through a network, receive monitoring data provided by the monitoring server 30, and process the monitoring data.

The apparatus 10 for processing video data may be implemented as a single physical apparatus, or may be implemented as an organic combination of a plurality of physical apparatuses. The apparatus 10 for processing video data may be configured as an apparatus integrated with the camera 20.

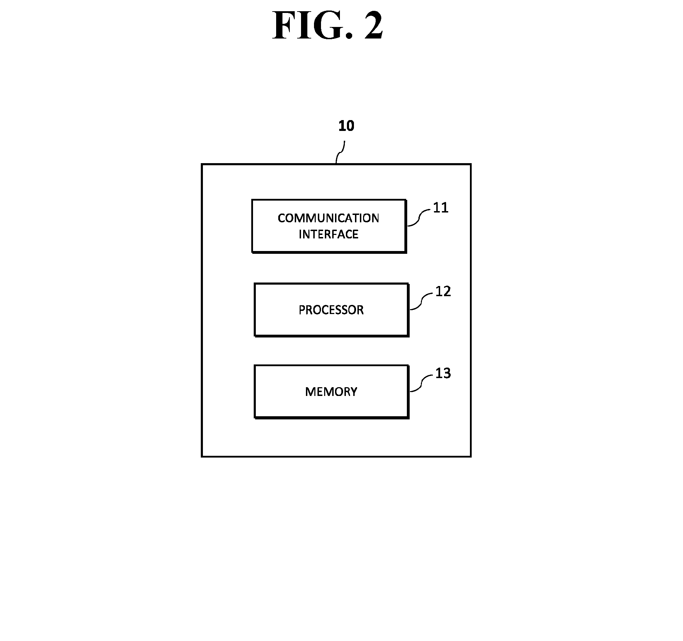

FIG. 2 is a block diagram illustrating a configuration of an apparatus for processing video data according to the present disclosure.

Referring to FIG. 2, the apparatus 10 for processing video data may include a communication interface 11, a processor 12, and a memory 13.

The communication interface 11 may receive videos from a plurality of cameras 20. The communication interface 11 may be configured to transmit transmission data, which is generated by processing video data in the apparatus 10 for processing video data, to the monitoring server 30 through a network.

The processor 12 may store video data captured by the camera 20 and detect an object of interest from a plurality of video frames of the stored video data. The processor 12 may perform masking processing on an object area of interest, including the detected object of interest, and encode the video data, which is subjected to the masking processing, to generate a video stream. The processor may generate transmission data including the video stream.

In addition, the processor 12 may extract feature information from a plurality of video frames of the stored video data, encode the extracted feature information to generate a feature stream, and generate transmission data including the video stream and the feature stream. The processor 12 may select one or more video frames from among the plurality of video frames constituting at least a portion of the video data, extract feature information from at least a partial selected area of the selected video frame, encode the extracted feature information to generate selected area feature information, and add the selected area feature information to the feature stream.

Additionally, the processor 12 may generate object metadata including characteristic information of an object of interest included in the best shot and add the generated object metadata to the transmitted data. The processor 12 may generate event metadata including characteristic information of an event and an object of interest included in an event detection shot, and may add the generated event metadata to the transmission data.

The memory 13 may store input data including video data acquired from the camera 20. The memory 13 may store data generated while the processor 12 processes video frames and store the feature stream, the selected area feature information, the object metadata, and the event metadata generated by the processor 12.

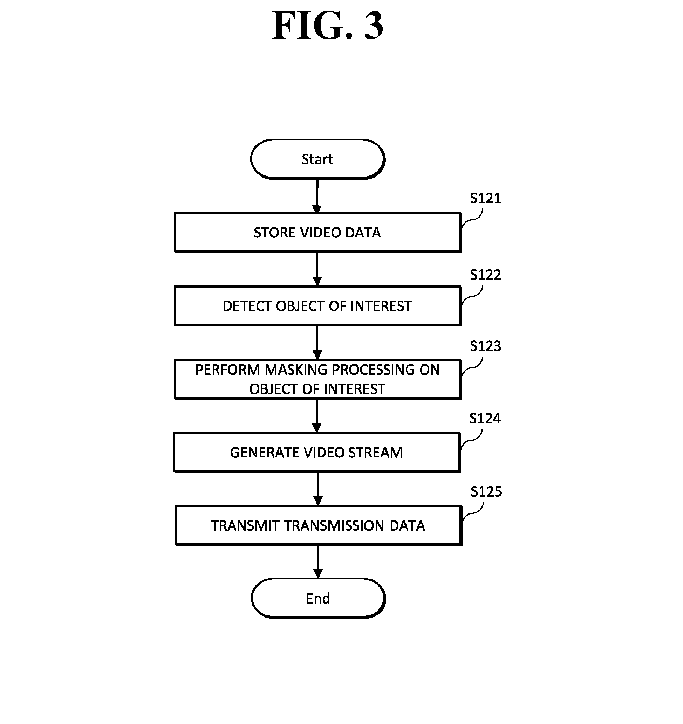

FIG. 3 is a flowchart showing a method of processing video data that is performed by the apparatus for processing video data according to the present disclosure.

Referring to FIG. 3, the method of processing video data may include storing video data (S121), detecting an object of interest (S122), performing masking processing on the object of interest (S123), generating a video stream (S124), and transmitting transmission data (S125).

In the storing of the video data (S121), the apparatus 10 for processing video data may store video data captured by the camera 20. The camera 20 may acquire a video signal, including a subject from a charge-coupled device (CCD) or complementary metal-oxide-semiconductor (CMOS) imaging device, and perform predetermined signal processing (white balance, up/down sampling, noise reduction, contrast enhancement, etc.) on the video signal as needed to generate video data.

In the detecting of the object of interest (S122), the apparatus 10 for processing video data may detect an object of interest from a plurality of video frames of the stored video data. The apparatus 10 for processing video data may detect the object of interest (a human face, a human body, a vehicle, a vehicle license plate, etc.) from the stored video data using a deep neural network-based object detection model.

For example, when the object of interest is a human face, the apparatus 10 for processing video data may detect facial feature points (landmarks) from a facial object using a deep neural network-based feature point detection model, and determine whether the same object is identified based on the facial feature points.

Whether the same object is identified may be determined based on cosine similarity between feature vectors of a facial feature point acquired from previous video data and a newly detected facial feature point. When the calculated cosine similarity is greater than or equal to a set threshold, that is, when it is determined that the newly detected facial feature point is similar to the already stored facial feature point, the same object may be identified. When the calculated cosine similarity is less than the set threshold, that is, when the newly detected facial feature point is not determined to be similar to the already stored facial feature point, the same object may not be identified, and in this case, the newly detected human face may be assigned new object identification information (an identification ID).

In the performing of the masking processing on the object of interest (S123), the apparatus 10 for processing video data may perform masking processing on an object area of interest including the detected object of interest. The apparatus 10 for processing video data may apply weights to pixel values within the object area of interest including the object of interest to change the original pixel values, or may replace the pixel values within the object area of interest with a preset pixel value, thereby performing blurring processing, mosaic processing, or block processing.

In the generating of the video stream (S124), the apparatus 10 for processing video data may encode the video data that is subjected to the masking processing to generate a video stream. The video stream may be generated by encoding video data using codecs including Motion Picture Experts Group-2 (MPEG-2), H.264, High Efficiency Video Coding (HEVC), Versatile Video Coding (VVC), Motion Picture Experts Group-Video Coding for Machines (MPEG-VCM), and the like.

In the transmitting of the transmission data (S125), the apparatus 10 for processing video data may transmit the transmission data including the generated video stream. Although FIG. 3 illustrates a video stream in the transmission data, the present invention is not limited to this embodiment, and as will be described below, a feature stream, selected area feature information, object metadata, and/or event metadata may be included in the transmission data.

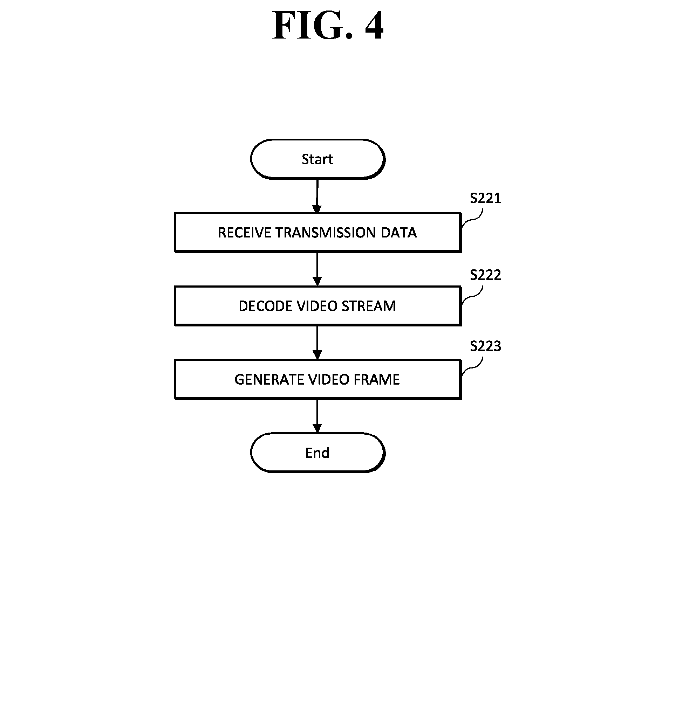

FIG. 4 is a flowchart showing a method of processing video data performed by a monitoring server according to the present disclosure.

Referring to FIG. 4, the monitoring server 30 may receive the transmission data transmitted from the apparatus 10 for processing video data (S221). The video stream included in the transmission data may be encoded using a video codec including MPEG-2, H.264, HEVC, VVC, MPEG-VCM, etc., and the video stream may be decoded using the corresponding video codec (S222). Through the decoding of the video stream, video frames (picture frames) included in the video stream may be acquired (S223).

When a feature stream, selected area feature information, object metadata, and/or event metadata are included in the transmission data, the monitoring server 30 may restore the feature stream, the selected area feature information, the object metadata, and/or the event metadata included in the transmission data, and perform data processing by machine vision or human vision.

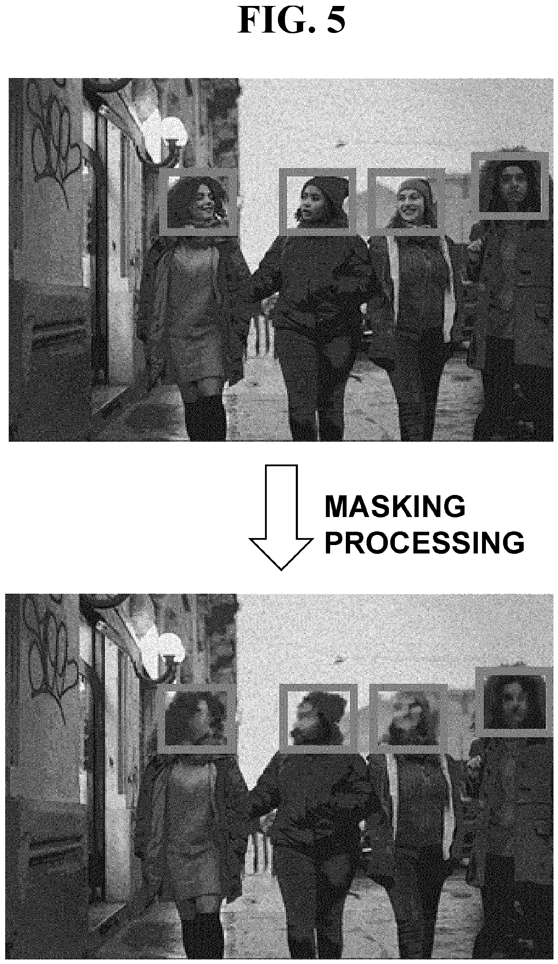

FIG. 5 is a diagram illustrating an example of masking processing for an object of interest according to the present disclosure.

The apparatus 10 for processing video data may detect an object of interest from a video frame. The object of interest may represent a preset type of object set by an administrator of the monitoring server 30, such as a human face, a human body, or a vehicle license plate. In one embodiment, the object of interest may be an object including personal identification information for identifying an individual.

The top image of FIG. 5 shows an example in which the object of interest is set to a human face. The apparatus 10 for processing video data may detect a human face as an object of interest. A boundary of an object area of interest including the detected object of interest may be displayed as a bounding box.

The bounding box may be configured as a rectangle surrounding the outermost contour of the object of interest. The size of the bounding box may be set in proportion to the amount of motion of the object of interest (the absolute value of a motion vector that will be described below) from a minimum area rectangle surrounding the outermost contour of the object of interest. For example, when the amount of motion of the object of interest is less than a predetermined threshold, the horizontal length and the vertical length of the minimum area rectangle surrounding the outermost contour of the object of interest may be $Lx$ and $Ly$, respectively, and when the amount of motion of the object of interest is greater than or equal to the predetermined threshold, the horizontal length and the vertical length of the rectangle surrounding the object of interest, that is, $Lx'$ and $Ly'$, may be expressed as follows. Here, a and b are real numbers greater than 1, and the values of a and b may be set to be proportional to the amount of motion of the object of interest. According to this setting, the size of the bounding box of the object of interest may become larger as the amount of motion of the object of interest increases, and thus even when the object of interest deviates from a predicted position, the object of interest may be masked within the bounding box set to be larger.

[Equation 1]

$$Lx' = a \times Lx, \; Ly' = b \times Ly$$

In FIG. 5, an example in which the object of interest is set to a human face, but the present invention is not limited to this example, and the scope of the present invention may include other objects of interest set by the administrator of the monitoring server 30, etc. such as the entire human body or the vehicle license plate including personal identification information.

The bottom image (a video frame) of FIG. 5 is a result obtained by performing masking processing on the top image (a video frame or a picture frame) of FIG. 5. The apparatus 10 for processing video data may perform mosaic processing, blurring processing, or blocking processing on the detected object of interest to prevent the object from being identified, thereby protecting personal privacy.

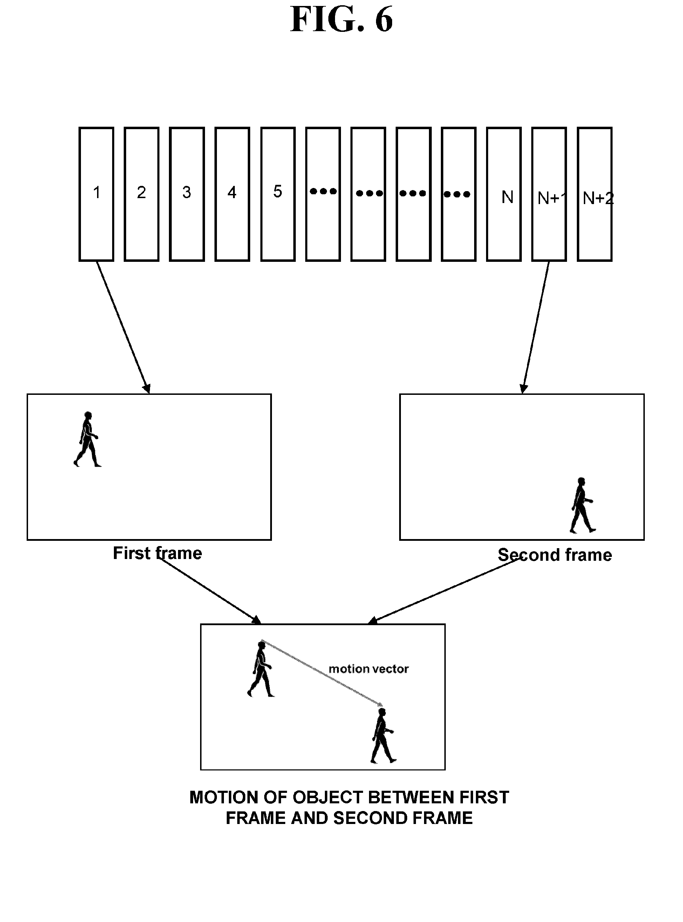

FIG. 6 is a diagram illustrating masking processing by object motion estimation according to the present disclosure.

The apparatus 10 for processing video data may store a video stream captured by the camera 20, and the video stream may include a plurality of video frames (picture frames: 1, 2, 3, 4, 5, ..., N, N+1, and N+2).

The apparatus 10 for processing video data may detect a first object of interest in a first video frame and detect the first object of interest in a second video frame, which is the (N+1)th frame from the first video frame. In FIG. 6, a person as an object of interest is located in the upper left end in the first video frame, and the same person is illustrated as being moved to the lower right end in the second video frame.

The apparatus 10 for processing video data may calculate a difference vector (motion vector: MV) representing the difference between the position of the first object of interest detected within the first video frame and the position of the first object of interest detected within the second video frame. The difference vector MV may represent the direction of motion and the amount of motion of the first object of interest moved between the first frame and the second frame.

The apparatus 10 for processing video data may predict the position of the first object of interest in N video frames between the first video frame and the second video frame from the difference vector MV. The position of the first object of interest in the N video frames between the first video frame and the second video frame may be calculated using the position of the first object of interest in the first video frame and the difference vector MV.

For example, the amount of motion per frame of the first object of interest may be obtained by dividing the difference vector MV by the number of frames N. When the position of the first object of interest in the first video frame is represented by R1 (x, y), the position of the first object of interest in an nth frame (n is a natural number between 2 and N+1), that is RN(x, y), may be expressed as Equation 2.

[Equation 2]

$$RN(x, y) = R1(x, y) + MV \times \frac{n}{N}$$

The position of the first object of interest between the first video frame and the second video frame is predicted according to Equation 2, and the predicted first object of interest may undergo to masking processing. Such a method of predicting the position of an object of interest reduces hardware resources and data throughput required for masking, compared to the conventional method of detecting an object of interest for all video frames and performing masking processing on the detected object of interest in all video frames.

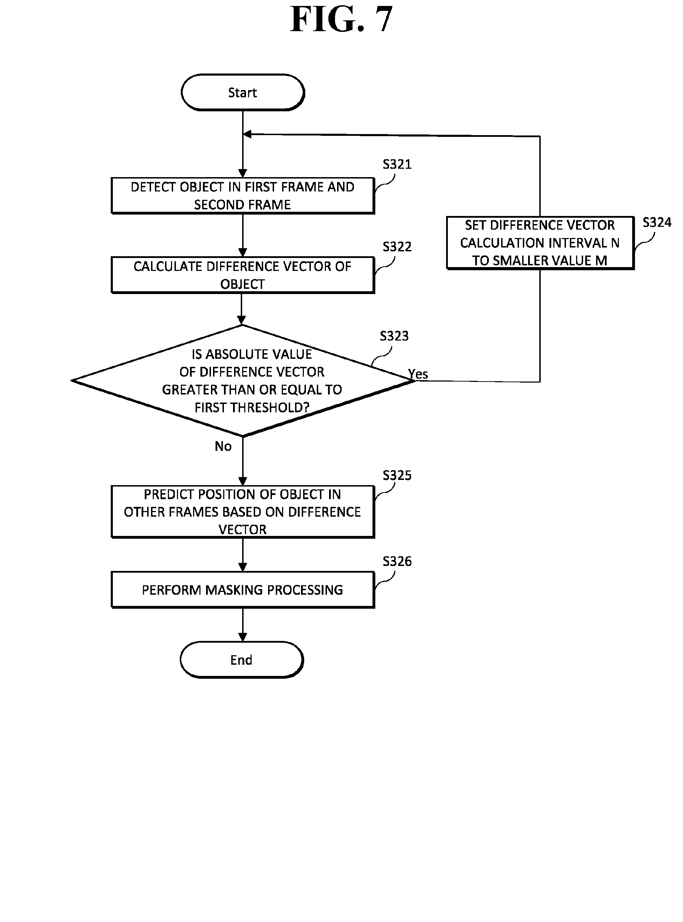

FIG. 7 is a diagram illustrating an example in which a difference vector calculation interval is adjusted when the amount of motion of an object is greater than or equal to a predetermined threshold according to the present disclosure.

When an object of interest moves very rapidly between the first video frame and the second video frame, it may be difficult to accurately detect the position of the object of interest using the prediction method shown in FIG. 6. In this case, it is required to adjust a prediction interval for predicting the position of the object of interest.

Referring to FIG. 7, the first object of interest in the first video frame and the second video frame may be detected (S321). A difference vector representing the difference between the position of the first object of interest within the first video frame and the position of the first object of interest within the second video frame may be calculated (S322).

It may be determined whether the absolute value of the calculated difference vector is greater than or equal to a first threshold (S323). When the absolute value of the difference vector is greater than or equal to the first threshold (YES in S323), a difference vector calculation interval N may be set to M that is smaller than N (S324).

For example, when the difference vector calculation interval N is 30, the difference vector may be calculated at an interval of 30 frames, and the position of the object of interest in the video frames located between the thirty frames may be predicted. When the absolute value (the magnitude of amount of motion) of the difference vector is greater than or equal to the first threshold, the difference vector may be calculated at an interval of 15 frames, which is less than 30 frames, and the position of the object of interest in the video frames located between the fifteen frames may be predicted.

When the absolute value of the difference vector is not greater than or equal to the first threshold (NO in S323), the position of the object of interest in the N video frames located between the first video frame and the second video frame may be predicted based on the difference vector without adjusting the difference vector calculation interval (S325). Afterwards, masking processing may be performed on the object of interest in the first video frame, the second video frame, and all other video frames located between the first and second video frames (S326).

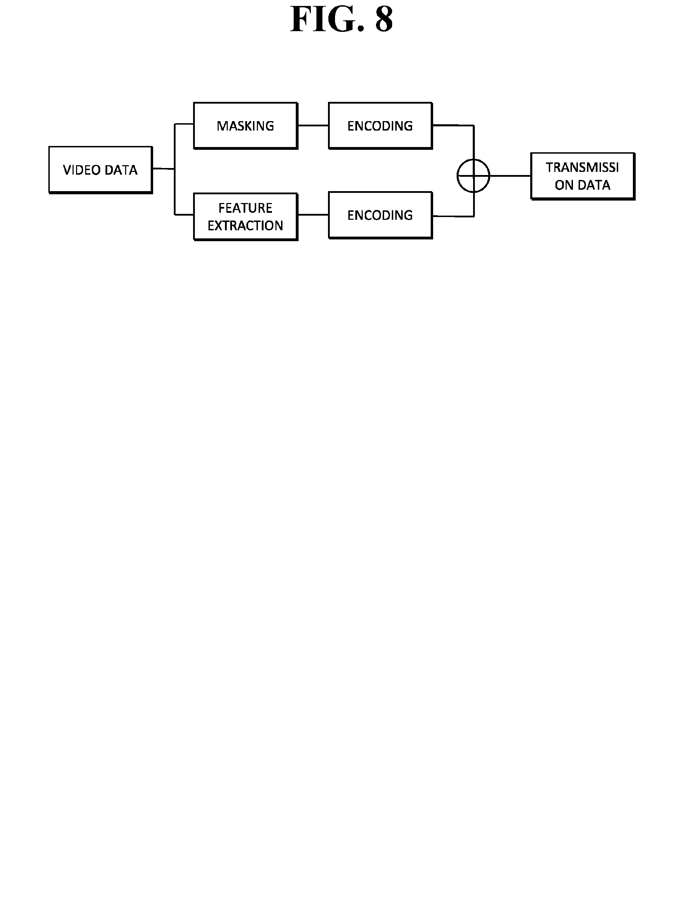

FIG. 8 is a diagram illustrating video encoding and feature encoding of video data according to the present disclosure.

When video data is masked and the masked video data is transmitted, the monitoring server 30 may not restore the video or image of the object of interest before the masking even by restoring the masked video data. Even when masking is performed to protect privacy, there is a need for a method of identifying an object of interest before the masking in some cases (such as searching for crime-related suspects).

Referring to FIG. 8, the video data may be masked in the object area of interest, and the masked video data may be encoded to generate a video stream. Additionally, feature information of the video data may be extracted, and the extracted feature information may be encoded to generate a feature stream, which is a set of encoded feature information for a plurality of frames. Transmission data may be configured to include the encoded video stream and the encoded feature stream.

Feature information may be referred to as a feature map, a sparse map, a feature vector, or a latent vector. In performing feature extraction from video data, various conventional image processing-based feature extraction techniques may be applied. Additionally, extraction of feature information may be performed using one or more feature extraction techniques based on deep learning or machine learning.

There are no specific limitations on a method of representing feature information, and the extracted feature information may be represented in various forms. For example, the representation of the extracted feature information may vary depending on at least one of the type and size of the data, the type and size of the network, and the type and size of the network layer. Additionally, the extracted feature information may include data having a characteristic related to at least one of highly correlated data, such as general images, sparse data, and dense data.

The extracted feature information may undergo transformation processing before encoding processing as needed. Feature information may be transformed into a form suitable for compression and restoration of the feature information. The extracted feature information may be transformed into different forms using various methods. For example, one or more methods among normalization, scaling, rearrangement, representation bit reduction, quantization, and filtering may be used to transform feature information.

Encoding may be performed on feature information. There are no specific limitations on the encoding technique used to encode feature information, and encoding techniques based on deep learning and machine learning as well as encoding techniques in the conventional video compression standards may be applied.

In one embodiment, for deep learning-based feature information encoding, one or more convolutional layers and fully connected layers may be included. In this case, the type of a filter for the convolutional layer may vary depending on one or more of the type of features, a learning method, and a size.

The feature information may be encoded in units of at least one of a sample, a line, a block, and a frame. In this case, encoding may be performed in units of at least one of a sample, a line, a block, and a frame, depending on at least one of the shape, size, and dimension of the input feature. Additionally, feature information may undergo prediction-based encoding, binarization-based encoding, entropy-based encoding, or transformation-based encoding.

Because the feature stream is included in the transmission data, the monitoring server 30 may restore feature information of the video data from the transmission data. The restored feature information may be used for object identification in machine vision.

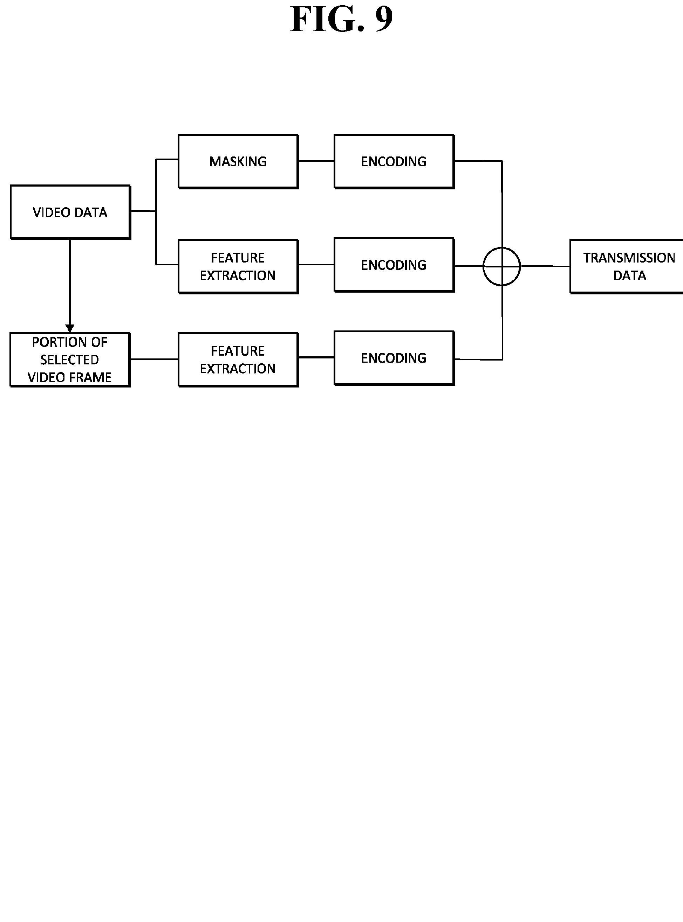

FIG. 9 is a diagram illustrating feature encoding for a partial area of a selected video frame according to the present disclosure.

In FIG. 9, an example in which feature information of a partial area of a selected video frame is included in the transmission data as selected area feature information in addition to the video stream and the feature stream is illustrated.

The video stream and the feature stream may be generated in the same method as described in FIG. 8. One or more video frames (picture frames) from the video data may be selected. The video frame to be selected may include a best shot of an object of interest or an event detection shot related to a preset event.

The best shot may be an object image with the highest object identification score calculated based on the size of an area occupied by the object, the orientation of the object, and the sharpness of the object. For example, the more pixels an object image occupies in the video data captured by the camera 20, the more the object is directed toward the front of the camera, and the sharper the object image, the higher the object identification score indicating the degree to which the object is identifiable.

The apparatus 10 for processing video data may determine, among a plurality of video frames including the same object, an area of a bounding box including the object in a video frame with the highest object identification score as a best shot.

An event detection shot may include an object area of interest in a video frame captured during detection of a preset event. For example, an event for detecting a vehicle driving on a crosswalk during a pedestrian signal (a green signal) may be assumed. When the vehicle driving on the crosswalk during a pedestrian signal is detected, an area of a bounding box including the vehicle captured by the camera 20 may be provided as the event detection shot.

Feature information of the partial selected area (a best shot of the object of interest or an event detection shot) of the selected video frame may be extracted, and the extracted feature information may be encoded to generate selected area feature information. The generated selected area feature information may be added to the transmission data.

The monitoring server 30 may restore the feature information of the best shot of the object of interest or the event detection shot from the selected area feature information included in the transmission data. The restored feature information of the best shot or the event detection shot may be used for data processing in machine vision. Object identification by machine may be facilitated using the feature information of the object of interest included in the best shot of the object of interest or the event detection shot.

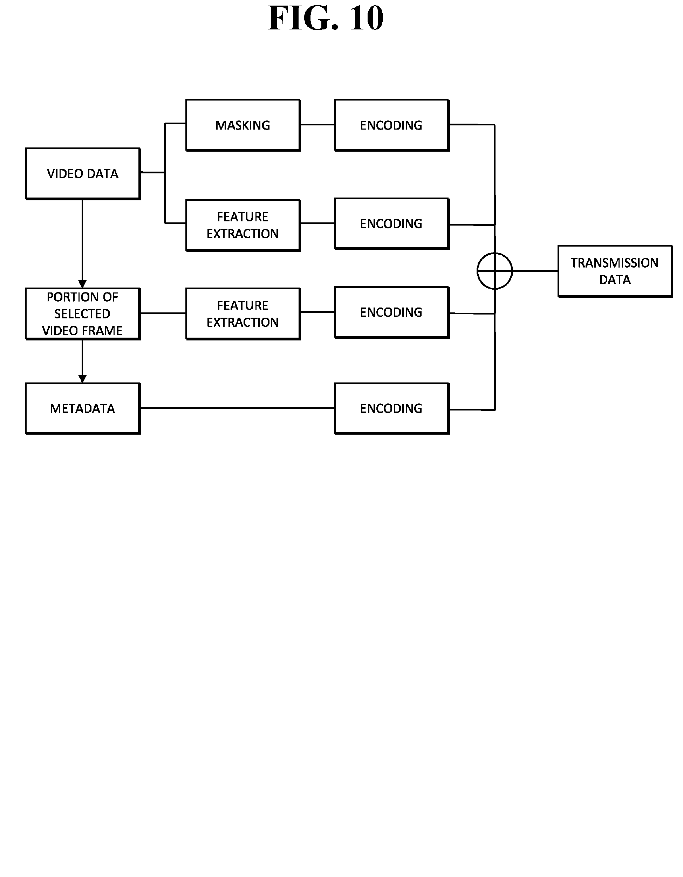

FIG. 10 is a diagram illustrating transmission of metadata for a partial area of a selected video frame according to the present disclosure.

In FIG. 10, an example in which metadata of a partial area of a selected video frame is included in the transmission data in addition to the video stream, the feature stream, and the selected area feature information is illustrated.

The video stream, the feature stream, and the selected area feature information may be generated in the same method as described in FIG. 9. In addition to selected area feature information including feature information of a partial selected area (a best shot of the object of interest or an event detection shot) of a selected video frame, metadata of an object and/or an event included in the partial selected area may be included in the transmission data in the example shown in FIG. 10,

In the example, metadata for a partial area of one or more video frames selected from among a plurality of video frames is encoded and included in the transmission data. The partial area may include a best shot or an event detection shot. Metadata may include the characteristics of an object of interest or the type of an event included in the best shot or the event detection shot. The characteristics of an object of interest may be characteristic information that may represent the object of interest, and may include, for example, the type of the object, the probability of the object, the attributes of the object, and the like.

The type of an object is a classification that may distinguish an object such as a human, a vehicle and the like, and the probability of an object is the probability or likelihood that the type of a detected object has been accurately classified. The probability of an object may be represented as a value between 0% and 100%, and a larger value indicates a higher probability that the classification is accurate.

The attributes of an object are various characteristics that vary according to the type of an object. For example, when the type of an object is a human, the attributes of an object may be a sex, a hairstyle, a color of an upper garment, a color of a lower garment, and the like. When the type of an object is a vehicle, the attributes of an object may be the type of a vehicle (SUV, sedan, sports car, two-wheeled vehicle, etc.), the color of a vehicle, and the like.

The metadata of the object of interest may include object identification information for identifying the identity of the object. The identity of an object may be determined through the type, the attributes, the shape, the motion, the motion trajectory, etc. of the object

The metadata of the object of interest may further include sub-attributes of the object, an appearance time of the object, and a size/position of the object. For example, the sub-attributes of an object may be whether a license plate object is present or absent when the object is a vehicle, and may be whether the object is wearing accessories, glasses, etc., when the object is a human.

The appearance time of an object may be a duration from when the object appears to when the object disappears, and include a start time and an end time. Alternatively, the appearance time of an object may be simply indicated as the time when the object first appears.

The size of an object may be a horizontal size/a vertical size of the object within one video frame. The size may be defined as a horizontal pixel size and a vertical pixel size of a video frame including a plurality of pixels. The position of an object may be the position occupied by the object within a video frame, and may be expressed, for example, as pixel coordinates of an upper left end of a bounding box surrounding the object.

When the metadata of the object of interest in the best shot or event detection shot is included in the transmission data, the monitoring server 30 may easily determine whether a specific object is present, and easily search for a specific object from the metadata of the object of interest acquired from the transmission data.

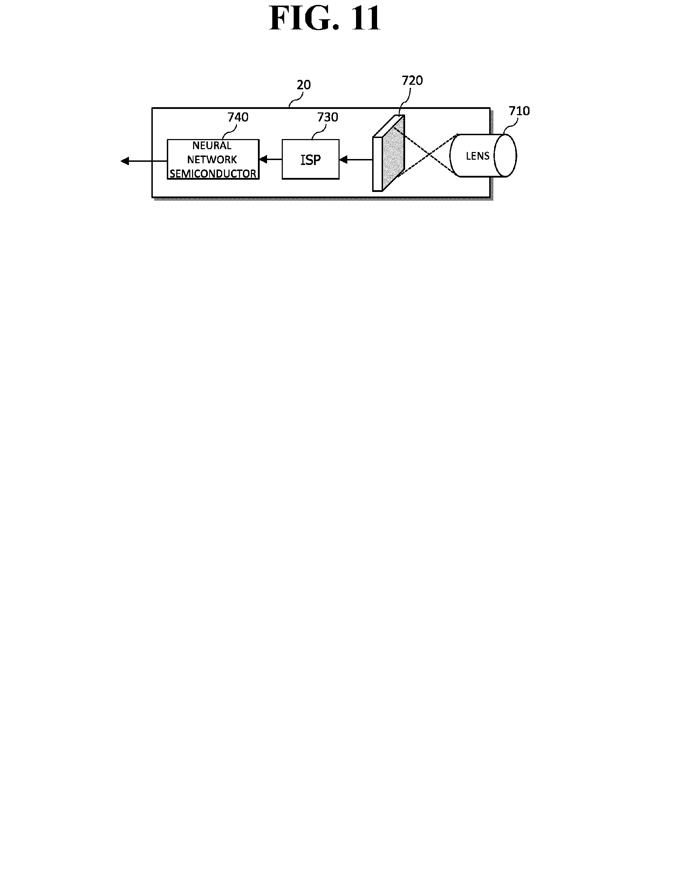

FIG. 11 is a diagram illustrating a configuration of a camera according to the present disclosure.

Referring to FIG. 11, the camera 20 may include a lens 710, an image sensor 720, an image signal processor (ISP) 730, and an artificial neural network semiconductor 740. The artificial neural network semiconductor 740 may have object detection and object classification functions.

When a video of an object and a background is captured by the camera 20, video data of the object and the background may be acquired from the image sensor 720 through the lens 710. The acquired video data may be processed through the ISP 730, and the processed video data may be input to the artificial neural network semiconductor 740. The artificial neural network semiconductor 740 may detect an object from the input video data and generate metadata related to the object.

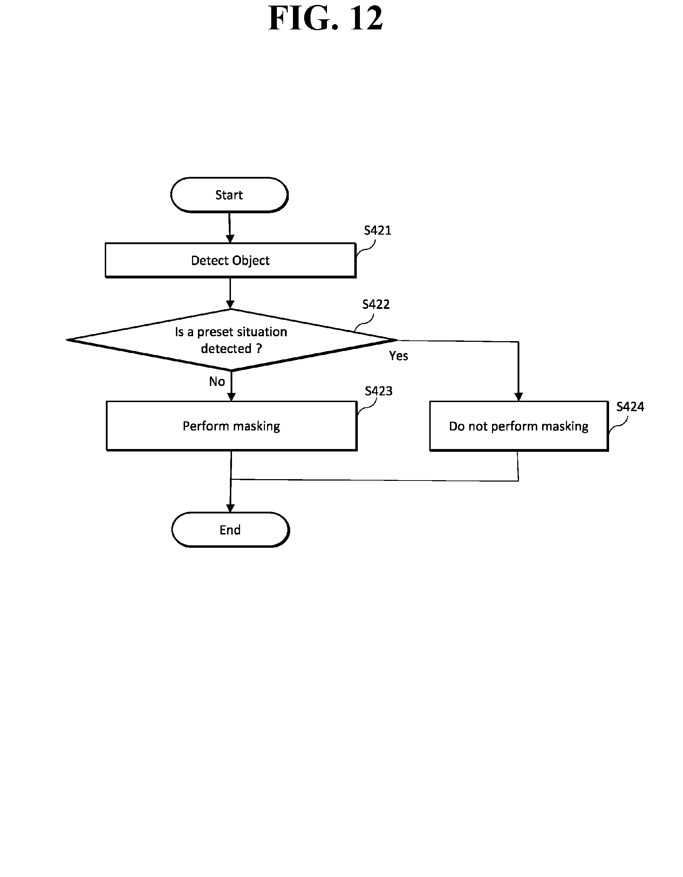

FIG. 12 is a diagram illustrating an example when masking processing is not performed according to the present disclosure.

In the above example, masking is performed on an object of interest to protect personal privacy. However, upon detection of a preset situation, for example, occurrence of a risk or warning situation such as when a person or a moving object intrudes into a restricted area, when a person leaves a store without paying for a product in an unmanned store, etc., or when a person possesses a weapon or firearm, identification of an object of interest becomes more important than protecting the privacy of the object of interest. In the present embodiment, masking processing is performed in a normal situation (S423), but is not performed when a preset situation is detected (S424). Since masking is not performed on the object of interest, the object of interest may be displayed without being masked in the video stream included in the transmission data. Accordingly, the monitoring server 30 may identify the object of interest, which is not masked when the preset situation is detected, from the transmission data with human vision.

As is apparent from the above, according to examples of the disclosure, privacy can be protected while data throughput is reduced when video data captured by a surveillance camera is transmitted.

In addition, according to examples of the disclosure, an object of interest can be easily identified from masked video data.

While the invention has been shown and described with respect to particulars, such as specific components, embodiments, and drawings, the embodiments are used to aid in the understanding of the present invention rather than limiting the present invention, and those skilled in the art should appreciate that various changes and modifications are possible without departing from the scope of the invention.

**Claims**

1.   A method of processing video data, comprising:

storing video data captured by a camera (20);
detecting an object of interest from a plurality of video frames of the stored video data;
performing masking processing on an object area of interest including the detected object of interest; and
encoding the video data which is subjected to the masking processing to generate a video stream,
wherein the masking processing is performed by estimating a position of the object of interest in a video frame located between two or more video frames for which a difference vector of the object of interest has been calculated, based on the difference vector of the object of interest detected in the two or more video frames.

2.   The method of claim 1, further comprising transmitting transmission data including the video stream.

3.   The method of claim 1 or 2, wherein the performing of the masking processing on the object area of interest including the detected object of interest includes:

calculating a difference vector representing a difference between a position of a first object of interest detected within a first video frame and a position of the first object of interest detected within a second video frame, wherein the second video frame is an $(N+1)^{th}$ frame from the first video frame;
predicting a position of the first object of interest in a video frame between the first video frame and the second video frame using the difference vector; and
performing masking processing on the first object of interest in a plurality of video frames from the first video frame to the second video frame.

4.   The method of claim 3, wherein, when an absolute value of the difference vector is greater than or equal to a predetermined first threshold, the number of video frames in which the position of the first object of interest is predicted is set to M, which is a value smaller than N.

5.   The method of claim any one of the previous claims, further comprising:

extracting feature information from the plurality of video frames of the stored video data and encoding the extracted feature information to generate a feature stream; and
transmitting transmission data including the video stream and the feature stream.

6.   The method of claim 5, further comprising:

selecting one or more video frames from among the plurality of video frames constituting at least a portion of the video data; and
extracting feature information from a selected area of at least a portion of the selected video frame, encoding the extracted feature information to generate selected area feature information, and adding the selected area feature information to the feature stream.

7.   The method of claim 6, wherein:

the selected video frame includes a best shot of the object of interest; and
the best shot includes an object image with a highest object identification score calculated based on a size of an area occupied by the object, an orientation of the object, and a sharpness of the object.

8. The method of claim 7, further comprising:

   generating object metadata including characteristic information of the object of interest included in the best shot; and
   adding the generated object metadata to the transmission data.

9. The method of any one of claims 6 to 8, wherein the selected video frame includes an event detection shot, and the event detection shot includes a video frame captured during detection of a preset event.

10. The method of claim 9, further comprising:

    generating event metadata including characteristic information of the event and the object of interest included in the event detection shot; and
    adding the generated event metadata to the transmission data.

11. The method of any one of the previous claims, wherein, when a preset situation is detected, the masking processing is not performed on an object area of interest related to the preset situation.

12. A program stored in a recording medium to cause a computer to execute the method of processing video data according to any one of claims 1 to 11.

13. An apparatus (10) for processing video data, comprising:

    a memory (13) in which input data is stored; and
    a processor (12) coupled to the memory (13),
    wherein the processor (12) is configured to:

       store video data captured by a camera (20);
       detect an object of interest from a plurality of video frames of the stored video data;
       perform masking processing on an object area of interest including the detected object of interest; and
       encode the video data which is subjected to the masking processing to generate a video stream,
       wherein the masking processing is performed by estimating a position of the object of interest in a video frame located between two or more video frames for which a difference vector of the object of interest has been calculated, based on the difference vector of the object of interest detected in the two or more video frames.

# FIG. 1

# FIG. 2

10

COMMUNICATION INTERFACE — 11

PROCESSOR — 12

MEMORY — 13

# FIG. 3

```
                    ┌──────────────┐
                    │    Start     │
                    └──────┬───────┘
                           │
                           ▼                      S121
          ┌────────────────────────────────┐
          │        STORE VIDEO DATA         │
          └────────────────┬───────────────┘
                           │
                           ▼                      S122
          ┌────────────────────────────────┐
          │      DETECT OBJECT OF INTEREST  │
          └────────────────┬───────────────┘
                           │
                           ▼                      S123
          ┌────────────────────────────────┐
          │   PERFORM MASKING PROCESSING ON │
          │         OBJECT OF INTEREST      │
          └────────────────┬───────────────┘
                           │
                           ▼                      S124
          ┌────────────────────────────────┐
          │      GENERATE VIDEO STREAM      │
          └────────────────┬───────────────┘
                           │
                           ▼                      S125
          ┌────────────────────────────────┐
          │    TRANSMIT TRANSMISSION DATA   │
          └────────────────┬───────────────┘
                           │
                           ▼
                    ┌──────────────┐
                    │     End      │
                    └──────────────┘
```

# FIG. 4

```
                    ┌──────────────┐
                    │    Start     │
                    └──────┬───────┘
                           │
                           ▼                        S221
        ┌──────────────────────────────────┐
        │   RECEIVE TRANSMISSION DATA       │
        └──────────────────┬───────────────┘
                           │
                           ▼                        S222
        ┌──────────────────────────────────┐
        │      DECODE VIDEO STREAM          │
        └──────────────────┬───────────────┘
                           │
                           ▼                        S223
        ┌──────────────────────────────────┐
        │     GENERATE VIDEO FRAME          │
        └──────────────────┬───────────────┘
                           │
                           ▼
                    ┌──────────────┐
                    │     End      │
                    └──────────────┘
```

# FIG. 5

MASKING
PROCESSING

# FIG. 6

First frame

Second frame

motion vector

**MOTION OF OBJECT BETWEEN FIRST
FRAME AND SECOND FRAME**

# FIG. 7

Start

DETECT OBJECT IN FIRST FRAME AND SECOND FRAME — S321

CALCULATE DIFFERENCE VECTOR OF OBJECT — S322

IS ABSOLUTE VALUE OF DIFFERENCE VECTOR GREATER THAN OR EQUAL TO FIRST THRESHOLD? — S323

Yes

SET DIFFERENCE VECTOR CALCULATION INTERVAL N TO SMALLER VALUE M — S324

No

PREDICT POSITION OF OBJECT IN OTHER FRAMES BASED ON DIFFERENCE VECTOR — S325

PERFORM MASKING PROCESSING — S326

End

# FIG. 8

# FIG. 9

# FIG. 10

# FIG. 11

# FIG. 12

```
           ┌─────────────┐
           │    Start     │
           └──────┬──────┘
                  │
                  ▼                          S421
        ┌──────────────────────┐
        │     Detect Object     │
        └──────────┬───────────┘
                   │
                   ▼                         S422
              ╱──────────╲
         ╱  Is a preset situation  ╲     Yes
        ╲       detected ?        ╱──────────────┐
              ╲──────────╱                        │
                  │ No                            │
                  ▼          S423                  ▼          S424
        ┌──────────────────┐          ┌──────────────────────┐
        │  Perform masking  │          │  Do not perform masking │
        └─────────┬────────┘          └───────────┬──────────┘
                  │                                │
                  │◄───────────────────────────────┘
                  ▼
           ┌─────────────┐
           │     End      │
           └─────────────┘
```

Europäisches
Patentamt

European
Patent Office

Office européen
des brevets

# EUROPEAN SEARCH REPORT

Application Number

EP 24 18 9526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/261045 A1 (ALTUEV MURAT K [RU]) 22 August 2019 (2019-08-22) * abstract * * figure 4 * * paragraphs [0006] - [0011] * * paragraphs [0043] - [0050] * - - - - - | 1-13 | INV. H04N7/18 G06V20/52 |
| X | US 2020/394411 A1 (DAHLBERG SIMON [SE] ET AL) 17 December 2020 (2020-12-17) * abstract * * paragraph [0003] * * paragraphs [0027] - [0035] * - - - - - | 1-13 | |

TECHNICAL FIELDS
SEARCHED      (IPC)

H04N

The present search report has been drawn up for all claims

| Place of search | Date of completion of the search | Examiner |
|---|---|---|
| The Hague | 13 January 2025 | Naci, Suphi Umut |

EPO FORM 1503 03.82 (P04C01)

## ANNEX TO THE EUROPEAN SEARCH REPORT
## ON EUROPEAN PATENT APPLICATION NO.

EP 24 18 9526

This annex lists the patent family members relating to the patent documents cited in  the above-mentioned European search report.
The members are as contained in the European Patent Office EDP file on
The European Patent Office is in no way liable for these particulars which are merely given for the purpose of information.

13-01-2025

| Patent document cited in search report | Publication date | Patent family member(s) | Publication date |
|---|---|---|---|
| US 2019261045 A1 | 22-08-2019 | DE 102018124149 A1 | 22-08-2019 |
| | | RU 2681364 C1 | 06-03-2019 |
| | | US 2019261045 A1 | 22-08-2019 |
| US 2020394411 A1 | 17-12-2020 | CN 112084832 A | 15-12-2020 |
| | | EP 3751851 A1 | 16-12-2020 |
| | | EP 4064703 A1 | 28-09-2022 |
| | | JP 7441732 B2 | 01-03-2024 |
| | | JP 2021006990 A | 21-01-2021 |
| | | KR 20200143232 A | 23-12-2020 |
| | | TW 202106020 A | 01-02-2021 |
| | | US 2020394411 A1 | 17-12-2020 |

EPO FORM P0459

For more details about this annex : see Official Journal of the European Patent Office, No. 12/82